# EUROPÄISCHE PATENTANMELDUNG

(11) **EP 1 526 302 A1**
(43) Veröffentlichungstag der Anmeldung: **27.04.2005**
(21) Anmeldenummer: 04019788.1
(22) Anmeldetag: 20.08.2004
(51) Int. Cl.: F16F 9/54

(54) **Dämpfungselement**

(30) Priorität: 22.10.2003 DE 10348971
(71) Anmelder: ZF FRIEDRICHSHAFEN Aktiengesellschaft, 88038 Friedrichshafen (DE)
(72) Erfinder: Müller, Michael, 53773 Hennef (DE); Brehm, Stefan, 53773 Hennef (DE); Klitsch, Bernd, 71720 Oberstenfeld (DE)

(57) **Zusammenfassung**

Dämpfungselement zwischen zwei Massen, bestehend aus einem Behälterrohr (3), einem darin in einem Dämpfungsmedium verschiebbar angeordneten Kolben, einer mit diesem verbundenen Kolbenstange (2) und einem Befestigungsteil (10) zur Verbindung des Dämpfungselements mit einer ersten der beiden gegeneinander schwingungsarm zu haltenden Massen, wobei die Kolbenstange mit einer der Massen verbunden ist, wobei das Befestigungsteil, bestehend aus einem Behälterboden (4) und / oder einem Schaft (5) und einer dem Anschluss des Befestigungsteils an die erste Masse dienenden Gabel (6), wobei die Gabel mit dem Schaft außerhalb des dynamisch wechselnd beanspruchten Bereiches der Gabel mit dem Schaft fest verbunden ist.

## Beschreibung

Die Erfindung bezieht sich auf ein Dämpfungselement zwischen zwei Massen, bestehend aus einem Behälterrohr, einem darin in einem Dämpfungsmedium verschiebbar angeordneten Kolben, einer mit diesem verbundenen Kolbenstange und einem Befestigungsteil zur Verbindung des Dämpfungselements mit einer ersten der beiden gegeneinander schwingungsarm zu haltenden Massen, wobei die Kolbenstange mit einer der Massen verbunden ist.

Dämpfungselemente der vorgenannten Art (DE 199 39 515 C2) werden beispielsweise an Fahrzeugen zwischen einer ersten Masse, nämlich der von Schwingungen frei zu haltenden Fahrgastzelle und einer zweiten Masse, nämlich den beim Fahrbetrieb unter Schwingungen stehenden Rädern bzw. des Fahrwerkes eingesetzt. Das Dämpfungselement ist mittels einer Kolbenstange z.B. mit der ersten Masse und mit einem Befestigungsteil mit einer zweiten Masse verbunden, wobei die Kolbenstange mit einem Dämpfungskolben verbunden ist, welcher in einem Arbeitszylinder eines Behälterrohres angeordnet ist. Das Problem einer Gabel eines Befestigungsteiles, welche mit einem Schaft eines Befestigungsteiles verbunden ist, besteht darin, dass eine ausreichende Bauteilfestigkeit vorhanden sein muss. Darüber hinaus ist bei derartigen Bauteilen auch eine ausreichende Dauerfestigkeit, sowie ein kleiner Bauraum als auch ein geringes Gewicht gefordert.

Aufgabe der Erfindung ist es, ein Dämpfungselement bestehend aus einem Behälterrohr, einer Kolbenstange und mindestens einem Befestigungsteil auf kostengünstige Weise und mit geringem Montageaufwand herzustellen, wobei eine ausreichende Dauerfestigkeit, ein geringer Bauraum und ein geringes Gewicht erzielt werden kann.

Zur Lösung dieser Aufgabe ist erfindungsgemäß vorgesehen, dass das Befestigungsteil, bestehend aus einem Behälterboden und/oder einem Schaft und einer dem Anschluss des Befestigungsteils an die erste Masse dienenden Gabel, wobei die Gabel mit dem Schaft außerhalb des dynamisch wechselnd beanspruchten Bereiches der Gabel mit dem Schaft fest verbunden ist.

Hierbei ist von Vorteil, dass das Befestigungsteil durch die Anordnung der Gabel am Schaft bei gleichem Bauraum und gleichem Gewicht eine höhere Dauerfestigkeit aufweist. Das Befestigungsteil wird im Bereich der Verbindungsstelle zwischen dem Schaft und der Gabel derart ausgeführt, dass sich die Gabel und der Schaft fügen lassen und außerhalb des dynamisch wechselnd beanspruchten Gabelbereiches, das heißt außerhalb der Gabelbiegung, miteinander fixieren lassen.

Es ist besonders vorteilhaft, wenn der Schaft und das Befestigungsteil zweiteilig ausgebildet sind.

Nach einem weiteren wesentlichen Merkmal ist vorgesehen, dass das Befestigungsteil aus mindestens einem Schmiedeteil besteht. Mit Vorteil kann hierbei vorgesehen werden, dass mindestens ein Teil des Befestigungsteiles aus Stahl besteht.

Zur Erzielung einer einwandfreien Fixierung der Bauteile zueinander ist vorgesehen, dass die Verbindung des Schaftes mit der Gabel durch eine einfache oder mehrfache Kombination aus Pressen, Kleben, Schweißen, Fügen, Verschrauben, Verstemmen oder Löten gesichert ist.

Eine weitere Ausgestaltung sieht vor, dass die Gabel einen zylindrischen Ansatz aufweist, welcher mit seiner Innenbohrung den Schaft koaxial umgibt. Mit Vorteil lässt sich dabei vorsehen, dass die Gabel im stirnseitigen Bereich des Schaftes fixiert ist oder dass die Gabel in einem von der Stirnseite des Schaftes entfernt liegenden Bereichs fixiert ist.

Vorteilhaft ist hierbei, dass die Fixierstelle, z.B. die Schweißstelle, außerhalb der Gabelbiegung liegt und damit außerhalb des dynamisch wechselnd beanspruchten Gabelbereiches, so dass eine Erhöhung der Dauerfestigkeit erzielt werden kann.

Bevorzugte Ausführungsbeispiele der Erfindung sind in den Zeichnungen schematisch dargestellt.

Es zeigt:
Figur 1 und 1 a ein Dämpfungselement mit einem Befestigungsteil, im Schnitt bzw. in Figur 1 a in Ansicht
Figur 2 und 2a eine weitere Ausführungsform eines Befestigungsteiles mit einer weiteren Ausführungsform einer Gabel, im Schnitt bzw. in Figur 2a in Ansicht.

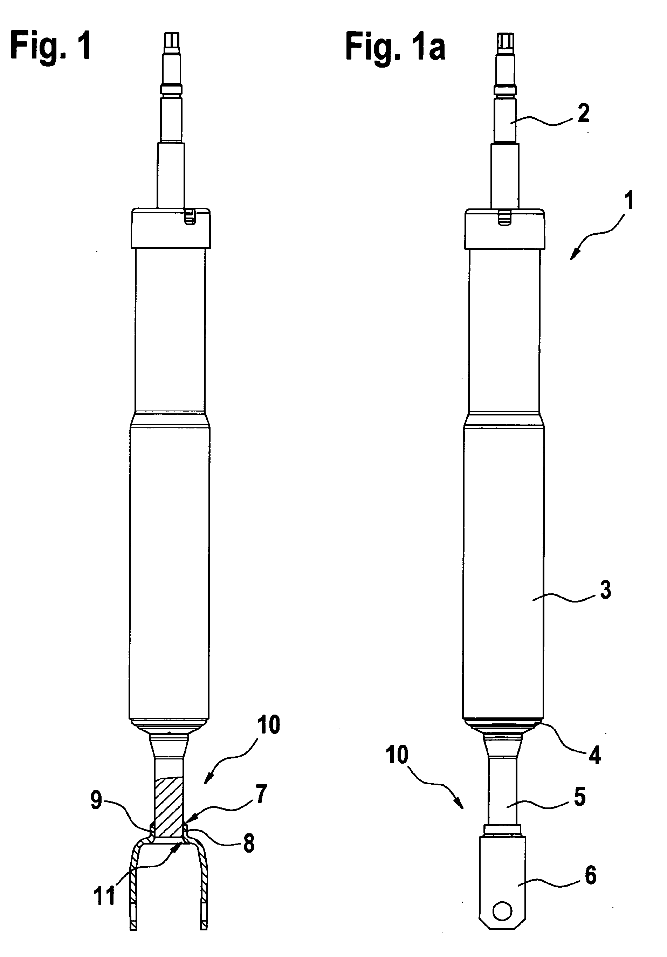

Das in Figur 1 und 1a dargestellte Dämpfungselement 1 besteht im wesentlichen aus der Kolbenstange 2, an dessen Ende ein Dämpfungskolben (nicht dargestellt) angeordnet ist, einem Behälterrohr 3 an dessen Behälterboden 4 ein Befestigungsteil 10 angebracht ist.

Das Befestigungsteil 10 besteht aus einem Schaft 5 und einer Gabel 6, hierbei ist die Gabel 6 mit einem zylindrischen Ansatz 8 versehen. Dieser zylindrische Ansatz 8 dient als Fügestelle 9 zwischen dem Schaft 5 und der Gabel 6 und ist an dieser Stelle verschweißt.

Die Schweißnaht 7 ist dabei im zylindrischen Ansatz 8 vom eigentlichen Biegebereich 11 entfernt angeordnet. Auf diese Art und Weise liegt die Schweißnaht 7 außerhalb des dynamisch wechselnd beanspruchten Gabelbereiches, so dass durch diese Anordnung eine Erhöhung des Dauerfestigkeitsbereiches erzielt werden kann.

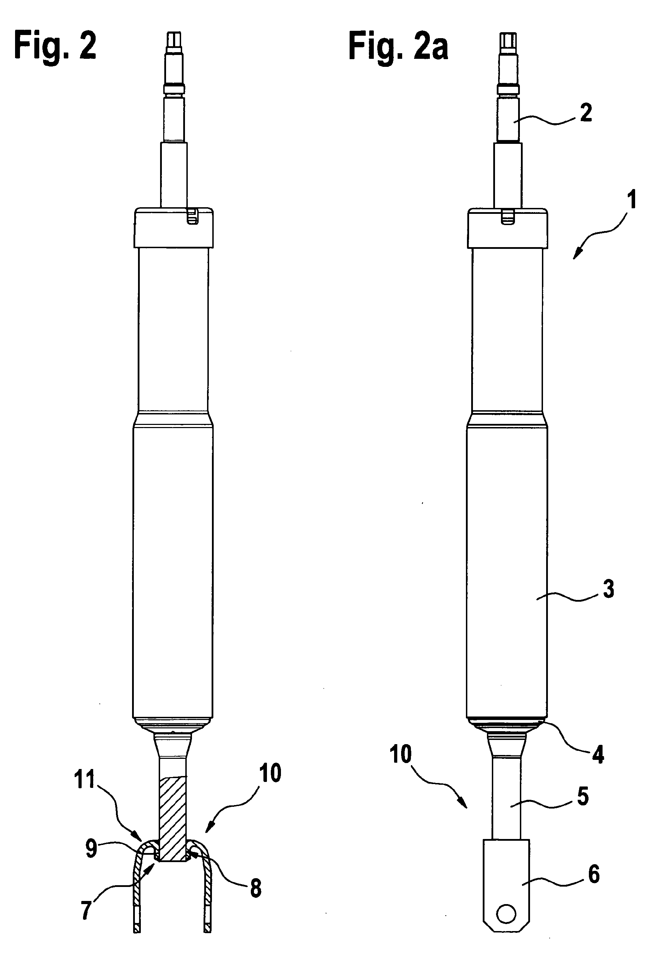

Aus der Figur 2 und 2a ist wiederum ein Befestigungsteil 10 zu entnehmen, bei dem jedoch die Gabel 6 einen umgekehrt verlaufenden zylindrischen Ansatz 8 aufweist, so dass die Schweißnaht 7 in den Bereich der Stirnseite des Schaftes 5 gelangt, während der Biegebereich 11 auf der Schweißnaht 7 abgewandten Seite der Gabel 6 positioniert ist, dabei ist auch diese Fügestelle 9 derart konzipiert, dass der dynamisch wechselnd beanspruchte Gabelbereich der Gabel 6 von der Schweißnaht entfernt angeordnet ist.

### Bezugszeichenliste

- 1 -: Dämpfungselement
- 2 -: Kolbenstange
- 3 -: Behälterrohr
- 4 -: Behälterboden
- 5 -: Schaft
- 6 -: Gabel
- 7 -: Schweißnaht
- 8 -: zylindrischer Ansatz
- 9 -: Fügestelle
- 10 -: Befestigungsteil
- 11 -: Biegebereich

## Patentansprüche

1. Dämpfungselement zwischen zwei Massen, bestehend aus einem Behälterrohr, einem darin in einem Dämpfungsmedium verschiebbar angeordneten Kolben, einer mit diesem verbundenen Kolbenstange und einem Befestigungsteil zur Verbindung des Dämpfungselements mit einer ersten der beiden gegeneinander schwingungsarm zu haltenden Massen, wobei die Kolbenstange mit einer der Massen verbunden ist,
**dadurch gekennzeichnet,**
**dass** das Befestigungsteil (10), bestehend aus einem Behälterboden (4) und / oder einem Schaft (5) und einer dem Anschluss des Befestigungsteils (10) an die erste Masse dienenden Gabel (6), wobei die Gabel (6) mit dem Schaft (5) außerhalb des dynamisch wechselnd beanspruchten Bereiches der Gabel (6) mit dem Schaft fest verbunden ist.

2. Dämpfungselement nach Anspruch 1,
**dadurch gekennzeichnet,**
**dass** der Schaft (5) und das Befestigungsteil (10) zweiteilig ausgebildet sind.

3. Dämpfungselement nach Anspruch 1,
**dadurch gekennzeichnet,**
**dass** das Befestigungsteil (1) aus mindestens einem Schmiedeteil besteht.

4. Dämpfungselement nach Anspruch 1 oder 2,
**dadurch gekennzeichnet,**
**dass** mindestens ein Teil des Befestigungsteiles (1) aus Stahl besteht.

5. Schwingungsdämpfer nach Anspruch 1,
**dadurch gekennzeichnet,**
**dass** die Verbindung des Schaftes (5) mit der Gabel (6) durch eine einfache oder mehrfache Kombination aus Pressen, Kleben, Schweißen, Fügen, Verschrauben, Verstemmen oder Löten gesichert ist.

6. Schwingungsdämpfer nach Anspruch 1,
**dadurch gekennzeichnet,**
**dass** die Gabel (6) einen zylindrischen Ansatz (8) aufweist, welcher mit seiner Innenbohrung den Schaft (5) koaxial umgibt.

7. Schwingungsdämpfer nach Anspruch 6,
**dadurch gekennzeichnet,**
**dass** die Gabel (6) im stirnseitigen Bereich des Schaftes (5) fixiert ist.

8. Schwingungsdämpfer nach Anspruch 6,
**dadurch gekennzeichnet,**
**dass** die Gabel in einem von der Stirnseite des Schaftes (5) entfernt liegenden Bereichs fixiert ist.
